# EUROPEAN PATENT SPECIFICATION

(11) **EP 3 353 459 B1**
(45) Date of publication and mention of the grant of the patent: **04.11.2020**
(21) Application number: 16797636.4
(22) Date of filing: 23.09.2016
(51) Int. Cl.: F16L 39/00, B60H 1/00, F16L 41/00

(54) **CONNECTION FOR TUBES OF A MOTOR VEHICLE**
VERBINDUNG FÜR ROHRE EINES KRAFTFAHRZEUGS
RACCORD POUR TUBES D'UN VÉHICULE À MOTEUR

(30) Priority: 24.09.2015 IT UB20153867
(43) Date of publication of application: 01.08.2018
(73) Proprietor: Sumitomo Riko Company Limited, Komaki-shi Aichi-ken 485-8550 (JP)
(72) Inventor: ANDREO, Carlo, 10123 Torino (IT)
(74) Representative: Fiussello, Francesco
(86) International application number: PCT/IB2016/055717
(87) International publication number: WO 2017/051382

(56) References cited:
- EP-A1- 1 547 715
- EP-A2- 1 574 773
- EP-A2- 2 706 321
- WO-A1-2010/116239
- DE-A1-102006 057 312

## Description

### TECHNICAL FIELD

The present invention relates to a connection for tubes of a motor vehicle, in particular to a connection for tubes of a heat exchanger in a conditioning system of a motor vehicle.

The conditioning system of a motor vehicle needs, for its duty cycle, to cool an operating fluid of the system, and heat exchangers are usually used for this purpose.

### BACKGROUND ART

It is known to use heat exchangers comprising two coaxial tubes, one in which the operating fluid of the conditioning system flows, preferably in the gaseous sate, and an outer tube, in which a coolant fluid for the operating fluid flows around the inner tube, preferably the same operating fluid in the liquid state.

Heat exchangers of the known art also comprise a connector implemented by means of a hose fitted on the inner tube and comprising an opening designed to fit on the outer tube. The hose usually comprises an opening perpendicular to the axis of the heat exchanger inside which a tube is engaged, or welded, which allows passage of the coolant fluid, as disclosed in WO2010/116239 A1.

Heat exchangers of the known art therefore need a spacious housing as the flow tube of the coolant fluid occupies considerable space in the direction perpendicular to the axis of the heat exchanger.

The need is therefore felt to have a connection for tubes of a heat exchanger of a conditioning circuit for motor vehicles that is compact and more versatile.

The need is also felt to have a connection that can be manufactured in a simple, rapid and inexpensive manner.

Other examples of known tubes connections are disclosed in documents EP1574773 A2, EP2706321 A2, EP1547715 A1 or DE102006057312 A1.

### DISCLOSURE OF INVENTION

The object of the present invention is to provide a connection that enables overcoming the above-described technical problems. The aforesaid object is achieved by a connection according to claim 1.

### BRIEF DESCRIPTION OF THE DRAWINGS

For a better understanding of the present invention, a preferred embodiment is described below, by way of non-limitative example, and with reference to the accompanying drawings, in which:
- Figure 1 is a sectional view of a heat exchanger comprising a connection according to the invention;
- Figure 2 is a section along line II-II of the heat exchanger in Figure 1; and
- Figure 3 is a lateral view of the heat exchanger in Figure 1.

### BEST MODE FOR CARRYING OUT THE INVENTION

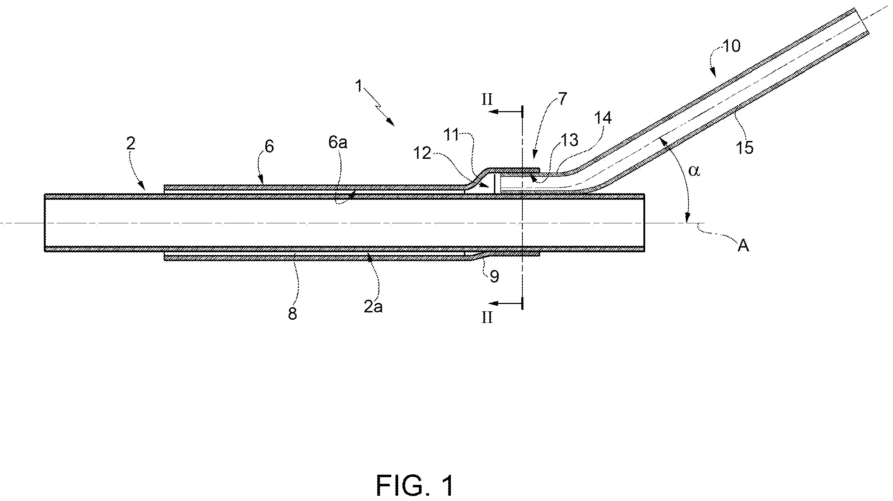

Figure 1 shows a heat exchanger 1 of a conditioning system for a motor vehicle. The heat exchanger 1 comprises an inner tube 2 with an axis A and in which an operating fluid of the conditioning system flows, preferably in the gaseous state, and an outer tube 3 coaxial to the inner tube 2 inside which a coolant fluid for the operating fluid flows, this coolant preferably being the same operating fluid that flows in the inner tube 2, but in the liquid state.

The inner tube 2 is made of a metal material, preferably aluminium or one of its alloys, and has a constant, preferably circular, section along axis A.

The outer tube 3 is made of a metal material, preferably aluminium or one of its alloys, and comprises a portion 6 coaxial to and with a constant section along axis A, preferably with a circular section of larger diameter than the inner tube 1, and a mechanically worked deformed portion 7.

Portion 6 and the inner tube 2 define a cylindrical annular chamber 8 radially delimited by the inner radial surface 6a of portion 6 and by the outer radial surface 2a of the inner tube 2, and axially delimited by the ends of portion 6.

Portion 7 is mechanically cold deformed and comprises a staggered portion 9, offset in a direction perpendicular to axis A and radially tapering until its end couples with the outer surface 2a of the inner tube 2.

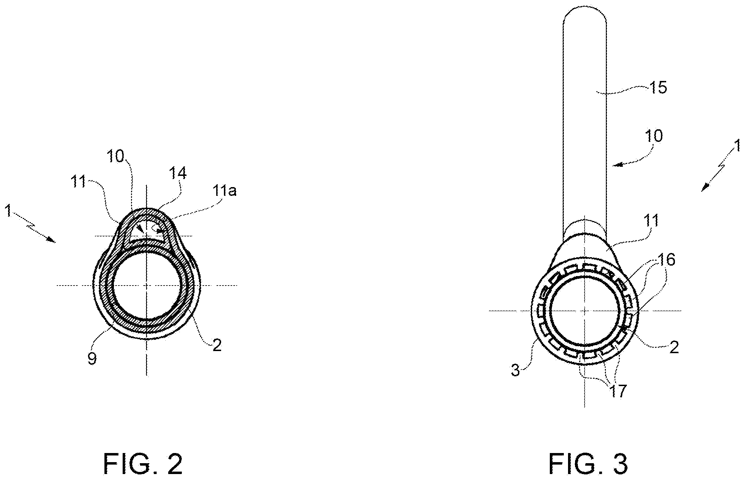

Portion 7 further comprises a projection 11 extending radially in a direction perpendicular to axis A and connected to the staggered portion 9. The projection 11 (Figure 2) has a profile 11a with a substantially overturned U shape and connected to the staggered portion 9.

The staggered portion 9 defines a chamber 12 around the inner tube 2 communicating with the annular chamber 8 while the projection 11 defines an inlet 13 communicating with chamber 12.

The heat exchanger 1 comprises a coolant fluid circulation tube 10 made of a metal material, preferably aluminium or one of its alloys, comprising a deformed portion 14 designed to be inserted in the inlet 13 and an inclined portion 15 connected to the deformed portion 14.

The inclined portion 15 is inclined at an angle α with respect to axis A and has a constant section along its axis, preferably a circular section. The angle α preferably has a value preferably comprised between 25° and 45°.

The deformed portion 14 has its axis parallel to axis A and is connected to the inclined portion 15. The section of the deformed portion 14 is complementary to that of the projection 11 at one end and tapered to connect with the inclined portion 15.

The tube 10 is fixed to the projection 11 by means of braze welding onto the inlet profile thereof, in the projection 11 and the inner tube 2 is welded inside the outer tube 3, all together in a single welding operation, preferably by braze welding.

The weld metal of the braze welding is a metal material, preferably an aluminium alloy.

The outer tube 3 may also comprise a plurality of channels 16 defined by a plurality of ribs 17 extending radially towards the inner tube 2 from the radial wall 6a and developing axially between the ends of portion 6 of the outer tube 2. The channels 16 are configured to increase the heat-exchange surface of the coolant fluid.

During manufacture, in order to obtain the staggered portion 9 and the projection 11 of the outer tube 3 it is necessary to mechanically remove or radially deform the ribs 17 for an axial depth of less than 50 mm, preferably 25-35 mm.
In use, the coolant fluid flows in the channels 16, passing into the staggered portion and conveyed from there into the tube 10. If necessary, the flow can be in the opposite direction.

During its passage, the coolant fluid absorbs the heat of the operating fluid that flows inside the inner tube 2 and which is thus cooled.

From the foregoing, the advantages of a connection according to the invention are evident.

The use of an inclined tube 10 welded directly on a projection 11 made on the outer tube 3 enables not using hoses of the known art, with a reduction in the space occupied, savings on materials and easy installation.

The braze welding permits achieving a tight seal between the three assembled tubes and considerable solidity.

The inclination of the inclined portion 15 of the tube 10 could be varied according to design, thus obtaining a highly versatile heat exchanger 1 with regard to its positioning.
Finally, it is clear that modifications and variants can be made regarding the heat exchanger 1 made according to the present invention without departing from the scope of the claims.

By way of example, the ribs 17 and the associated channels might not be present or there could be other embodiments designed to increase the heat exchange between the two fluids.

## Claims

1. A connection for tubes comprising an inner tube (2) coaxial to an axis (A) and configured for an operating fluid of a conditioning system to flow inside it, an outer tube (3) coaxial to said inner tube (2) for a coolant fluid for said operating fluid to flow between said inner (2) and outer (3) tubes, and a coolant fluid circulation tube (10), said outer tube (3) comprising an inlet (13) for the coolant fluid circulation tube (10), which is a tube of passage of said coolant fluid, said coolant fluid circulation tube (10) being coupled with said inlet (13) and being welded within said inlet (13), wherein the axis of said coolant fluid circulation tube (10) is inclined by an angle (α) with respect to said axis (A) and with respect to a vertical axis perpendicular to said axis (A) and wherein said inlet (13) is obtained in a projection (11) radial with respect to said axis (A), **characterized in that** said coolant fluid circulation tube (10), said outer tube (3) and said inner tube (2) are welded to each other by means of a single welding.

2. The connection according to any one of the preceding claims, **characterized in that** said welding is a braze welding.

3. The connection according to claim 2, **characterized in that** the weld metal of said braze welding is an aluminium alloy.

4. The connection according to any of the preceding claims, **characterized in that** said angle is comprised between 25° and 45°.

5. The connection according to any one of the preceding claims, **characterized in that** said inlet (13) has an overturned U shape.

6. The connection according to any one of the preceding claims, **characterized in that** one of said inner tube (2) and said outer tube (3) comprises a plurality of projections (17) configured to increase the thermal exchange of the coolant fluid.

7. Use of a connection according to any one of the preceding claims for a heat exchanger (1) in a conditioning system for a motor vehicle.

## Patentansprüche

1. Eine Verbindung für Rohre, umfassend ein inneres Rohr (2), das koaxial zu einer Achse (A) ausgerichtet und so konfiguriert ist, dass ein Betriebsfluid eines Konditionierungssystems in ihm strömt, ein äußeres Rohr (3), das koaxial zu dem inneren Rohr (2) steht, und in dem ein Kühlfluid für das Betriebsfluid zwischen dem inneren Rohr (2) und dem äußeren Rohr (3) strömen kann, und ein Kühlfluidzirkulationsrohr (10), wobei das äußere Rohr (3) einen Einlass (13) für das Kühlfluidzirkulationsrohr (10) umfasst, welches ein Durchgangsrohr für das besagte Kühlfluid ist und welches mit besagtem Einlass (13) gekoppelt und innerhalb besagten Enlasses (13) verschweißt ist, wobei die Achse des besagten Kühlfluidzirkulationsrohres (10) um einen Winkel (α) in Bezug auf die besagte Achse (A) und in Bezug auf eine vertikale Achse, welche senkrecht zu der besagten Achse (A) steht, geneigt ist, und wobei besagter Einlass (13) in einer Projektion (11) radial in Bezug auf die besagte Achse (A) erhalten wird, **dadurch gekennzeichnet, dass** das besagte Kühlfluidzirkulationsrohr (10), besagtes äußeres Rohr (3) und besagtes inneres Rohr (2) miteinander über eine einzige Schweißung verschweißt sind.

2. Die Verbindung nach einem der vorstehenden Ansprüche, **dadurch gekennzeichnet, dass** die besagte Schweißung eine Hartlötschweißung ist.

3. Die Verbindung nach Anspruch 2, **dadurch gekennzeichnet, dass** das Schweißgut der Hartlötschweißung eine Aluminiumlegierung ist.

4. Die Verbindung nach einem der vorstehenden Ansprüche, **dadurch gekennzeichnet, dass** der Winkel (α) zwischen 25° und 45° liegt.

5. Die Verbindung nach einem der vorstehenden Ansprüche, **dadurch gekennzeichnet, dass** der besagte Einlass (13) eine umgedrehte U-Form aufweist.

6. Die Verbindung nach einem der vorhergehenden Ansprüche, **dadurch gekennzeichnet, dass** entweder das innere Rohr (2) oder das äußere Rohr (3) eine Vielzahl von Vorsprüngen (17) aufweist, die dazu ausgelegt sind, den Wärmeaustausch des Kühlfluids zu erhöhen.

7. Verwendung einer Verbindung nach einem der vorstehenden Ansprüche für einen Wärmetauscher (1) in einer Klimaanlage für ein Kraftfahrzeug.

## Revendications

1. Raccord pour des tubes comprenant un tube intérieur (2) coaxial par rapport à un axe (A) et configuré pour qu'un fluide de travail d'un système de climatisation s'écoule à l'intérieur de lui, un tube extérieur (3) coaxial par rapport audit tube intérieur (2) pour qu'un fluide de refroidissement pour ledit fluide de travail s'écoule entre lesdits tubes intérieur (2) et extérieur (3), et un tube de circulation de fluide de refroidissement (10), ledit tube extérieur (3) comprenant un orifice d'entrée (13) pour le tube de circulation de fluide de refroidissement (10), qui est un tube de passage dudit fluide de refroidissement, ledit tube de circulation de fluide de refroidissement (10) étant accouplé audit orifice d'entrée (13) et étant soudé à l'intérieur dudit orifice d'entrée (13), dans lequel l'axe dudit tube de circulation de fluide de refroidissement (10) est incliné suivant un angle (α) par rapport audit axe (A) et par rapport à un axe vertical perpendiculaire audit axe (A) et dans lequel ledit orifice d'entrée (13) est obtenu dans une saillie (11) radiale par rapport audit axe (A), **caractérisé en ce que** ledit tube de circulation de fluide de refroidissement (10), ledit tube extérieur (3) et ledit tube intérieur (2) sont soudés les uns aux autres au moyen d'un soudage simple.

2. Raccord selon l'une quelconque des revendications précédentes, **caractérisé en ce que** ledit soudage est un soudobrasage.

3. Raccord selon la revendication 2, **caractérisé en ce que** le métal soudé dudit soudobrasage est un alliage d'aluminium.

4. Raccord selon l'une quelconque des revendications précédentes, **caractérisé en ce que** ledit angle est compris entre 25° et 45°.

5. Raccord selon l'une quelconque des revendications précédentes, **caractérisé en ce que** ledit orifice d'entrée (13) a une forme de U renversé.

6. Raccord selon l'une quelconque des revendications précédentes, **caractérisé en ce que** l'un dudit tube intérieur (2) et dudit tube extérieur (3) comprend une pluralité de saillies (17) configurées pour augmenter l'échange thermique du fluide de refroidissement.

7. Utilisation d'un raccord selon l'une quelconque des revendications précédentes pour un échangeur de chaleur (1) dans un système de climatisation pour un véhicule à moteur.
